# EUROPÄISCHE PATENTSCHRIFT

(11) **EP 0 358 805 B1**
(45) Veröffentlichungstag und Bekanntmachung des Hinweises auf die Patenterteilung: **17.03.1993**
(21) Anmeldenummer: 88115136.9
(22) Anmeldetag: 15.09.1988
(51) Int. Cl.: H02K 21/18, H02K 1/14, H02K 37/16

(54) **Selbstanlaufender Einphasen-Synchronmotor**
Self-starting single-phase synchronous motor
Moteur synchrone monophasé autodémarrant

(43) Veröffentlichungstag der Anmeldung: 21.03.1990
(73) Patentinhaber: SIEMENS AKTIENGESELLSCHAFT, 80333 München (DE)
(72) Erfinder: Altenbernd, Gerald, Dr.-Ing., D-3000 Hannover 91 (DE); Waehner, Ludwig, Dipl.-Ing., D-8700 Wuerzburg (DE)

(56) Entgegenhaltungen:
- EP-A- 0 151 497
- WO-A-82/03928
- DD-B- 204 007
- DE-A- 1 874 871
- DE-A- 3 208 155
- US-A- 2 815 460
- US-A- 2 827 583
- FEINWERKTECHN. & MESSTECHN., Band 87, Nr. 4 Mai/Juni 1979, Seiten 163 - 169; H. Schemmann: "Zweipolige Einphasen-Synchronmotoren mit dauermagnetischem Läufer, Eigenschaften und Anwendung"

## Beschreibung

Die Erfindung bezieht sich auf einen selbstanlaufenden Einphasen-Synchronmotor gemäß Oberbegriff des Patentanspruchs 1; ein derartiger Einphasen-Synchronmotor ist aus der DE-Z.: "Feinwerktechnik und Meßtechnik" 87 (1979), H.4, S.163-169 bekannt.

Einphasen-Synchronmotoren der vorgenannten bekannten Art werden bei zweipoliger Ausführung üblicherweise in unsymmetrischer Bauart mit einem U-förmigen, an den Polenden geöffneten Statorblechschnitt ausgeführt. Die zuvor gewickelten Statorspulen werden von den freien Polenden her über die Schenkel der Pole aufgeschoben; aus diesem Grunde werden im allgemeinen bei einer zweipoligen Ausführung zwei getrennt gewickelte Statorerregerspulen vorgesehen, die je nach Dimensionierung anschließend parallel oder in Reihe geschaltet mit der äußeren Speisespannungsquelle verbindbar sind.

Ein derartiger Motor kann nur bei synchroner Drehzahl im Mittel Leistung abgeben. Trotz dieser Einschränkung ist ein selbständiger Anlauf möglich. Er erfolgt in Form eines Einschwingvorganges, bei welchem sich Drehrichtung, Geschwindigkeit solange wechselweise ändern, bis der synchrone Zustand erreicht ist. Auch das Drehmoment wechselt dabei ständig seine Richtung und Größe. Der stationäre Zustand wird abhängig vom Phasenwinkel der Spannung beim Einschalten gegebenenfalls erst nach mehreren Netzperioden erreicht. Dabei kann sich schließlich die positive oder die negative Drehrichtung als endgültige Drehrichtung einstellen.

Zwei Bedingungen müssen für einen selbständigen Anlauf und einen Hochlauf erfüllt sein. Der Motor muß beim Einschalten zunächst überhaupt in Bewegung kommen, muß danach im weiteren Verlauf der Bewegung innerhalb einer bestimmten Zeit in eine Drehrichtung so stark beschleunigt werden, daß er die synchrone Geschwindigkeit erreicht und auch weiterhin dem Statorfeld folgen kann.

Die erste Bedingung für einen selbständigen Anlauf wird üblicherweise durch zusätzliche Vorrichtungen mechanischer oder elektrischer Art erreicht. Als Vorrichtung elektrischer Art ist es bei einem selbstanlaufenden Einphasen-Synchronmotor der eingangs genannten Art bekannt, den Pol eines Einzelpols selbst eine unsymmetrische Form derart zu geben, daß der Luftspalt an gegenüberliegenden Stellen eines Polpaares vergrößert ist. Durch die DE-C-34 03 041 ist zu diesem Zweck z.B. ein Stufenpolverlauf für einen Polbogen mit unterschiedlicher Luftspaltweite, zwischen dem Polbogen und dem Rotorblech. Dies hat zur Folge, daß der dauermagnetische Rotor sich um einen Winkel γ gegenüber der Stellung verdreht, die er bei symmetrischen Polbögen einnehmen würde, bis er die Stellung erreicht hat, in welcher der magnetische Widerstand minimal wird. Beim Einschalten der Statorerregung übt dann das Statorfeld auf den dauermagnetischen Rotor ein Drehmoment solange aus, bis die beiden Felder parallel sind. Wird die Richtung des Statorfeldes zur rechten Zeit umgepolt und bewegt sich der Rotor infolge seiner kinetischen Energie geringfügig über diese Parallelstellung hinaus, so wird er wiederum eine halbe Umdrehung weiter beschleunigt usw.

Gemäß Aufgabe vorliegender Erfindung soll für einen selbstanlaufenden Einphasen-Synchronmotor auf konstruktiv sowie fertigungstechnisch einfache und trotzdem betriebssichere Weise eine verstärkte Anlaufhilfe und damit die Einsatzmöglichkeit für Antriebe mit hohem Anlaufwiderstandsmoment, insbesondere für Laugenpumpen, geschaffen werden.

Die Lösung dieser Aufgabe gelingt bei einem Einphasen-Synchronmotor der eingangs genannten Art durch die Lehre des Patentanspruchs 1; vorteilhafte Ausgestaltungen der Erfindung sind jeweils Gegenstand der Unteransprüche.

Die erfindungsgemäße Konstruktion eines selbstanlaufenden Einphasen-Synchronmotors erlaubt in fertigungstechnisch, insbesondere stanztechnisch, einfacher Weise die Einstellung und/oder Vergrößerung des Winkels γ, um den der Rotor im Einschaltaugenblick gegenüber der Statorfeldachse im Moment des Einschaltens des Einphasen-Synchronmotors verdreht ist. Wird das erfindungsgemäße Prinzip auf einen selbstanlaufenden Einphasen-Synchronmotor mit einem durch eine Luftspaltaufweitung unsymmetrischen Polbogen zur Verdrehung der Rotorfeldachse gegenüber der Statorfeldachse angewendet, so ist zweckmäßigerweise der Bereich der erhöhten lokalen Statorerregung in dem Polbogenteil vorgesehen, der dem Polbogenteil mit dem kleineren Luftspalt abgewandt ist; dadurch ergibt sich eine Vergrößerung des an sich durch die Luftspaltaufweitung bereits vorhandenen Verdrehungswinkels γ, derart daß das Anlaufmoment des selbstanlaufenden Einphasen-Synchronmotors merklich erhöht ist.

In fertigungstechnisch besonders einfacher Weise werden die zur Einstellung bzw. Erhöhung des Verdrehwinkels γ vorgesehenen Engpässe durch einfache Ausstanzungen im Statorblechpaket im Trennungsbereich zwischen den Polbogenteilen erhöhter Statorerregung einerseits und nicht erhöhter Statorerregung andererseits vorgesehen, wobei nach einer vorteilhaften Ausgestaltung der Erfindung randoffene Ausstanzungen entweder im Bereich der luftspaltseitigen Bohrung und/oder der Außenbegrenzung der Pole des Statorblechpaketes vorgesehen sind. Durch Anzahl und Anordnung der Ausstanzungen kann eine gezielte Anpassung des jeweiligen Betriebsverhaltens an verschiedene Betriebsanforderungen mit geringem Aufwand, jedoch in großer Variationsbreite erreicht werden.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: den radialen Querschnitt durch einen Einphasen-Synchronmotor mit unsymmetrischem Blechschnitt, konstantem Luftspalt und einer luftspaltseitigen Ausstanzung zur Bildung einer Engstelle,
- FIG 2: den radialen Querschnitt durch einen Einphasen-Synchronmotor mit unsymmetrischem Blechschnitt, gestuftem Luftspalt und einer luftspaltseitigen Ausstanzung zur Bildung einer magnetischen Engstelle,
- FIG 3: den radialen Querschnitt durch einen Einphasen-Synchronmotor mit unsymmetrischem Blechschnitt, gestuftem Luftspalt und einer polrandseitigen Ausstanzung zur Bildung einer magnetischen Engstelle,
- FIG 4: den radialen Querschnitt durch einen Einphasen-Synchronmotor mit symmetrischem Blechschnitt, konstantem Luftspalt und in beiden Polen luftspaltseitigen Ausstanzungen zur Bildung je einer magnetischen Engstelle,
- FIG 5: den radialen Querschnitt durch einen Einphasen-Synchronmotor mit symmetrischem Blechschnitt, gestuftem Luftspalt und je einer polrandseitigen Ausstanzung in jedem Pol zur Bildung einer magnetischen Engstelle.

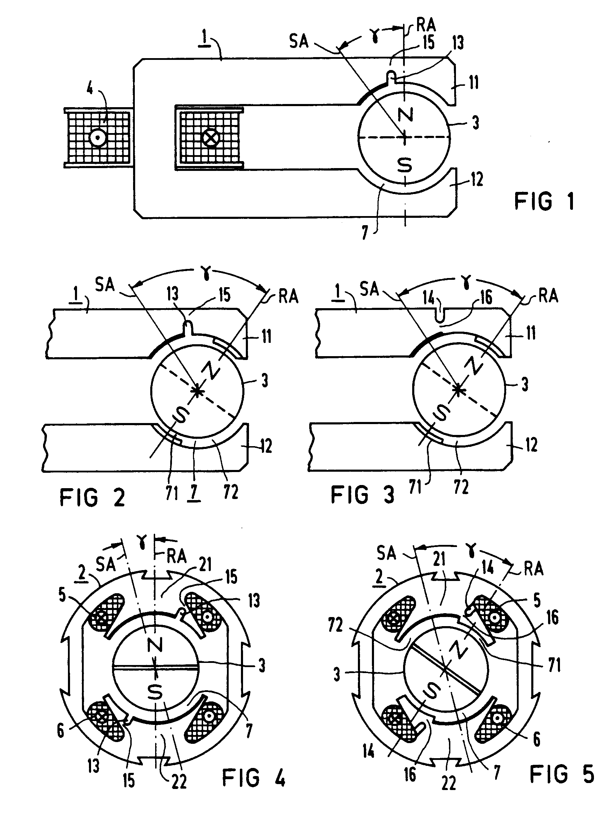

FIG 1 bis 3 zeigen einen Einphasen-Synchronmotor mit unsymmetrischem, U-förmigem Statorblechschnitt mit zwei Einzelpolen 11,12, einer Statorwicklungsspule 4 und einem permanenterregten Rotor 3 mit einem Nordpol N und einem Südpol S. Die Stellung des Rotors bzw. die Lage der Rotorfeldachse RA wird bei nicht vorhandenem Ständerfeld durch die Anordnung von Nordpol N und Südpol S sowie die Luftspaltkonfiguration bestimmt; der Rotor 3 nimmt eine Stellung ein, in welcher der magnetische Widerstand minimal ist; daraus ergeben sich die unterschiedlichen Rotorstellungen bzw. die Lage der Rotorfeldachsen RA in FIG 1 bis 3.

FIG 1 zeigt einen Statorblechschnitt mit konstantem Luftspalt 7, so daß die Rotorfeldachse RA in Ruhestellung des Rotors durch die Mitte der Polbögen der gegenüberliegenden Pole 11,12 verläuft; FIG 2,3 zeigen einen sogenannten Stufenpol mit einem unterhalb des Polbogens verlaufenden Luftspalt 7 mit einem ersten Luftspaltteil 71 geringerer radialer Weite und einem zweiten Luftspaltteil 72 mit größerer radialer Weite. Der für die Rotorfeldachse RA in Ruhestellung maßgebliche minimale magnetische Widerstand liegt in der Mitte des Polbogens des ersten Luftspaltabschnittes 71 mit der geringeren radialen Weite.

Zur Festlegung der jeweiligen erfindungsgemäßen magnetischen Engstellen 15 bzw.16 sind in den Statorblechpaketen Ausstanzungen 13,14 vorgesehen, von denen in FIG 1,2 jeweils im Polbogen des einen Pols 11 eine luftspaltseitige Ausstanzung 13 und gemäß FIG 3 in dem einen Pol 11 eine polrandseitige randoffene Ausstanzung 14 vorgesehen sind. Durch die Ausstanzungen 13,14 ergeben sich magnetische Engstellen 15,16, durch die bei eingeschalteter Statorwicklungsspule 4 ein Statorfeldverlauf gegeben ist, dessen Verteilung über den Polbogen des Poles 11 bzw. des Poles 12 in FIG 1 bis 3 durch verstärkte Randlinierung angedeutet ist. Aufgrund dieser Statorfeldverteilung ergibt sich die jeweils in FIG 1 bis 3 eingetragene Lage der Statorfeldachse SA.

Es ist ersichtlich, daß durch die einfache Maßnahme einer Ausstanzung 13 gemäß FIG 1 ein Verdrehwinkel γ zwischen der Rotorfeldachse RA in Ruhestellung des Rotors und der Statorfeldachse SA des mit einer magnetischen Engstelle versehenen Poles und damit ein bestimmtes Anlaufmoment beim Einschalten der Ständerwicklungsspule 4 und gemäß FIG 2,3 eine Vergrößerung der Verdrehwinkels γ gegenüber dem durch den Stufenpol bereits gegebenen Verdrehwinkel γ erzielbar ist.

FIG 4,5 zeigen die Anwendung des erfindungsgemäßen Prinzips auf einen zweipoligen Einphasen-Synchronmotor mit symmetrischem Blechschnitt. Wie in FIG 1 bis 3 ist ein nicht geschlossener Blechschnitt vorgesehen, derart daß die Polspitzen der Polhörner der Statorpole nicht miteinander verbunden sind.

FIG 4 zeigt einen Statorblechschnitt mit einem über den Polbogen der beiden Pole 21,22 konstanten Luftspalt 7, so daß die Rotorfeldachse RA in Ruhestellung des Rotors mittig durch die Pole 21,22 verläuft. Aufgrund der in beiden Polen 21,22 durch luftspaltseitige randoffene Ausstanzungen 13 hervorgerufenen Engstellen 15 ergibt sich die mit verstärkter Linierung eingetragene Feldverteilung über den Polbögen und der dadurch bestimmte eingetragene Verlauf der Statorfeldachse SA des jeweils mit einer magnetischen Engstelle versehenen Poles. Es ist ersichtlich, daß auch bei dem symmetrischen Statorblechschnitt gemäß FIG 4 durch die einfache Maßnahme der Ausstanzungen 13 ein für den Anlauf des Einphasen-Synchronmotors vorteilhafter Verdrehwinkel zwischen der Rotorfeldachse R und der Statorfeldachse L erzielbar ist.

Ähnlich wie bereits zu FIG 2,3 erläutert zeigt FIG 5 die vorteilhafte Vergrößerung des durch den Stufenpol bereits vorhandenen Verdrehwinkels γ durch die erfindungsgemäßen, im Ausführungsbeispiel polrandseitig stirnoffenen Ausstanzungen 14.

## Patentansprüche

1. Selbstanlaufender Einphasen-Synchronmotor mit einem zumindest zweipoligen, insbesondere permanentmagnetisch erregten Rotor (3) und einem zumindest ein Polpaar mit zwei Polen (11;12) aufweisenden Statorblechpaket (1) sowie mit im Einschaltzeitpunkt gegenüber der Rotorfeldachse (RA) um einen Winkel γ verdrehter Statorfeldachse (SA), **dadurch gekennzeichnet**, daß zumindest ein Pol (11,12 bzw.21,22) eines Polpaares aufgrund zumindest einer im Statorblechpaket (1 bzw.2) vorgesehenen magnetischen Engstelle (15,16) einen Polbogenteil erhöhter lokaler Statorerregung mit entsprechend um den Winkel gegenüber der Rotorfeldachse (RA) verdrehter Statorfeldachse (SA) aufweist.

2. Selbstanlaufender Einphasen-Synchronmotor mit einem durch Luftspaltaufweitung des Luftspaltes (7) unsymmetrischen Polbogen zur Verdrehung der Rotorfeldachse (RA) gegenüber der Statorfeldachse (SA) nach Anspruch 1, **dadurch gekennzeichnet**, daß der Bereich der erhöhten lokalen Statorerregung in dem Polbogenteil vorgesehen ist, der dem Polbogenteil mit dem kleineren Luftspalt abgewandt ist.

3. Selbstanlaufender Einphasen-Synchronmotor nach Anspruch 1 und/oder 2, **gekennzeichnet** durch einen in beiden Polbögen zumindest eines Polpaares vorgesehenen Polbogenteil mit erhöhter lokaler Statorerregung.

4. Selbstanlaufender Einphasen-Synchronmotor nach zumindest einem der Ansprüche 1 bis 3, **dadurch gekennzeichnet**, daß zur Bildung der magnetischen Engstellen (15,16) im Statorblechpaket (1 bzw.2) Ausstanzungen (13,14) im Trennungsbereich zwischen den Polbogenteilen erhöhter und nichterhöhter Statorerregung vorgesehen sind.

5. Selbstanlaufender Einphasen-Synchronmotor nach zumindest einem der Ansprüche 1 bis 4, **gekennzeichnet** durch randoffene Ausstanzungen (13) im Bereich der luftspaltseitigen Bohrung des Statorblechpaketes (1 bzw.2).

6. Selbstanlaufender Einphasen-Synchronmotor nach zumindest einem der Ansprüche 1 bis 4, **gekennzeichnet** durch randoffene Ausstanzungen (14) im Bereich der Außenbegrenzung der Pole des Statorblechpaketes (1 bzw.2).

## Claims

1. Self-starting single-phase synchronous motor having an at least two-pole rotor (3), in particular with permanent magnet excitation, and a laminated stator core (1) having at least one pole pair with two poles (11;12) and having stator field axis (SA) rotated in the connection instant relative to the rotor field axis (RA) by an angle γ, characterized in that at least one pole (11,12 and 21,22) of a pole pair, due to at least one narrow magnetic point (15,16) provided in the laminated stator core (1 and 2), has a pole arc region of increased local stator excitation with stator field axis (SA) appropriately rotated by the angle relative to the rotor field axis (RA).

2. Self-starting single-phase synchronous motor with a pole arc unsymmetrical by way of air-gap widening of the air gap (7) for the rotation of the rotor field axis (RA) relative to the stator field axis (SA) according to claim 1, characterized in that the region of the increased local stator excitation is provided in the pole arc region which is directed away from the pole arc region with the smaller air gap.

3. Self-starting single-phase synchronous motor according to claim 1 and/or 2, characterized by a pole arc region with increased local stator excitation provided in both pole arcs of at least one pole pair.

4. Self-starting single-phase synchronous motor according to at least one of claims 1 to 3, characterized in that for the formation of the narrow magnetic points (15,16) in the laminated stator core (1 and 2) punch-outs (13,14) are provided in the separation region between the pole arc regions of increased and non-increased stator excitation.

5. Self-starting single-phase synchronous motor according to at least one of claims 1 to 4, characterized by open-edge punch-outs (13) in the region of the air-gap-side bore of the laminated stator core (1 and 2).

6. Self-starting single-phase synchronous motor according to at least one of claims 1 to 4, characterized by open-edge punch-outs (14) in the region of the outer limitation of the poles of the laminated stator core (1 and 2).

## Revendications

1. Moteur synchrone monophasé autodémarreur comportant un rotor au moins bipolaire (3), excité notamment par des aimants permanents, et un paquet de tôles statoriques (1) comportant au moins un couple pourvu de deux pôles (11;12), ainsi qu'un axe (SA) du champ du stator décalé d'un angle γ par rapport à l'axe (RA) du champ du rotor, à l'instant du branchement, caractérisé par le fait qu'au moins un pôle (11,12 ou 21,22) d'un couple de pôles, comporte, sur la base d'au moins une zone d'étranglement magnétique (15,16) prévue dans le paquet de tôles statoriques (1 ou 2), une partie d'arc polaire produisant une excitation locale accrue du stator, avec un axe (SA) du champ du stator décalé de l'angle correspondant par rapport à l'axe (RA) du champ du rotor.

2. Moteur synchrone monophasé autodémarreur comportant un arc polaire, qui est dissymétrique en raison de l'élargissement de l'entrefer (7), pour le décalage de l'axe (RA) du champ du rotor par rapport à l'axe (SA) du champ du stator, selon la revendication 1, caractérisé en ce que la zone de l'excitation locale accrue du stator est prévue dans la partie de l'arc polaire qui est tournée à l'opposé de la partie de l'arc polaire présentant l'entrefer le plus petit.

3. Moteur synchrone monophasé autodémarreur suivant la revendication 1 et/ou 2, caractérisé par une partie d'arc polaire, au niveau de laquelle l'excitation locale du stator est accrue et qui est prévue dans les deux arcs polaires d'au moins un couple de pôles.

4. Moteur synchrone monophasé autodémarreur suivant au moins l'une des revendications 1 à 3, caractérisé par le fait que pour la formation des zones d'étranglement magnétiques (15,16) dans le paquet de tôles statoriques (1 ou 2), il est prévu des découpes (13,14) dans la zone de séparation entre les parties de l'arc polaire dans lesquelles l'excitation du stator est accrue et les parties de l'arc polaire, dans lesquelles l'excitation du stator n'est pas accrue.

5. Moteur synchrone monophasé autodémarreur suivant au moins l'une des revendications 1 à 4, caractérisé par des découpes (13) s'ouvrant au niveau du bord et situées dans la zone du perçage, situé du côté de l'entrefer, du paquet de tôles statoriques (1 ou 2).

6. Moteur synchrone monophasé autodémarreur suivant au moins l'une des revendications 1 à 4, caractérisé par des découpes (14), ouvertes du côté du bord, dans la zone de la limite extérieure des pôles du paquet de tôles statoriques (1 ou 2).
